(19)

Europäisches Patentamt

European Patent Office

Office européen des brevets

(11) **EP 4 325 242 A1**

(12) **EUROPEAN PATENT APPLICATION**

(43) Date of publication:
**21.02.2024 Bulletin 2024/08**

(21) Application number: **22191145.6**

(22) Date of filing: **19.08.2022**

(51) International Patent Classification (IPC):
**G01S 7/41** (2006.01)   **G01S 13/86** (2006.01)
**G01S 17/89** (2020.01)   **G01S 17/931** (2020.01)
**G06F 18/25** (2023.01)

(52) Cooperative Patent Classification (CPC):
**G06V 20/58; G01S 7/295; G01S 7/417;
G01S 13/865; G01S 13/931**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventors:
• **LABUSCH, Sven
50737 Köln (DE)**

• **BECKER, Adrian
51375 Leverkusen (DE)**
• **KOSSACZKY, Igor
42117 Wuppertal (DE)**
• **GRUMPE, Arne
45276 Essen (DE)**

(74) Representative: **Bardehle Pagenberg
Partnerschaft mbB
Patentanwälte Rechtsanwälte
Prinzregentenplatz 7
81675 München (DE)**

(54) **FEATURE DETECTION IN VEHICLE ENVIRONMENTS**

(57)    The present disclosure relates to a computer-implemented method, apparatus, computer program and a vehicle comprising the apparatus for determining one or more features of a surrounding of a vehicle, the method comprising the steps of: obtaining sensor data comprising measurement points, the measurement points being arranged in a data space; determining an abstract signal processing space based on a distribution of the measurement points in the data space; mapping the measurement points into the abstract signal processing space; and determining the one or more features in the abstract signal processing space based on an arrangement of the measurement points in the abstract signal processing space.

EP 4 325 242 A1

S110a
Obtain a set of high dimensional data points; $p \in \mathbb{R}^k$

S120a
Determine the abstract signal processing space

S130a
Map the data points into the abstract signal processing space

S140a
Index the mapped data points in the abstract signal processing space to obtain the data points in the data space from the mapped data points using the index

S150a
Determine context information from the mapped data in the abstract signal processing space

S160a
Obtain multiple instances of context information.

S170a
Append context information to the data points in the data space using the index

Fig. 1a

## Description

### Field of the invention

The present disclosure relates to a computer-implemented method, an apparatus, an apparatus in a vehicle, and a computer program for determining one or more features of a surrounding of a vehicle.

### Background

Nowadays, vehicles (cars, ships, robots etc.) are oftentimes operated using vehicle assistance systems (e.g., such as an Advanced Driving Assistance Systems (ADAS)) to provide some degree of driving assistance to the driver. Additionally, the vehicle assistant system may also be able to control a vehicle semi-autonomously or even fully autonomously. This requires that the vehicle assistant system has sufficient knowledge of its surroundings, in particular of obstacles such as other vehicles, pedestrians etc. to avoid collisions and allowing the vehicle to navigate safely through its surrounding environment. Typically, imaging sensors are used to obtain the required data to determine objects or classify the surrounding in the environment of a vehicle.

However, the amount of data obtained, for example, by such sensors required to sufficiently represent the environment of the vehicle is relatively large. That is, the sensor data is generally provided as high-dimensional data, for example, as three- or four-dimensional data. Such high dimensional data requires large amounts of computational power to be able to determine the features in the environment using this data. Since it may also be desired to determine the features in the environment in real-time, signal processing is required to fulfill both requirements/demands. Since, for example, radar sensors are relatively inexpensive, have a long range and are less weather dependent than alternatives, using radar sensors as the imaging sensors has seen a growth in popularity.

Using radar sensors as an example, the data obtained from the sensors is pre-processed to reduce the amount of data and computational power that is required to detect the features. One common pre-processing method in this field is a Constant-False-Alarm Rate (CFAR) algorithm. The CFAR uses variable thresholds relative to the background noise and the radar data on the data to separate targes of interest from background noise and clutter and obtain a point cloud which is used as the input source for a feature detection algorithm.

However, the points in this point cloud do not have local or global information about their surroundings. This information is valuable to increase the reliability of radarbased feature detection systems. Therefore, methods are developed which take this kind of context into account. However, acquiring contextual in higher dimensional spaces is typically relatively complex and expensive. Accordingly, several approaches have been developed to overcome the problem of acquiring context in higher dimensional spaces.

For example, methods are known that operate on absolute valued 3D-tensors. In a corresponding model, one dimension is summed over a tensor formed by the other dimensions such that a two-dimensional tensor is obtained comprising information of all three dimensions. However, even though all three dimensions are considered, and thus more information is included in this example, these methods rely mainly on recognizing the energy distribution of the two-dimensional tensor.

Furthermore, methods are known where more information from the third dimension is maintained. For example, three two-dimensional heatmaps corresponding to all three pairs of the respective dimensions (AB, BC, AC) are extracted from the 3D heatmap/tensor (comprising dimensions A, B, C). From these two-dimensional heatmaps, only one heatmap is preserved (Such as AB). The BC and the AC heatmaps are condensed in the C-dimension by summing the C of the BC and AC heatmaps to obtain a vector dependent on the remaining dimension (B, A) including the C-dimension value. These vectors are then replicated in the respective other dimension, i.e., the A dimension (for the B-dimension vector), or the B dimension (for the A-dimension vector), to obtain new AB heatmaps comprising the summed C-dimensional information. These heatmaps are then input into a deep network for classification.

While it is apparent that the initial data is significantly reduced (by adding up the C-dimensional values) and more of the C-dimensional information is maintained, large amount of the information (of the C-dimensional information) are still lost in the process.

Against this background, an object of the present invention is to provide a method for efficient determination of features in the environment of a vehicle, with reduced computational load and preferably high reliability.

### Summary of the invention

The above-mentioned problem is at least partly solved by a computer-implemented method according to claim 1, by an apparatus according to claim 13, by a computer program according to claim 14, and by a vehicle according to claim 15.

One aspect of the present invention relates to a computer-implemented method for determining one or more features of a surrounding of a vehicle, the method comprising the steps of: obtaining sensor data comprising measurement points, the measurement points being arranged in a data space; determining an abstract signal processing space based on a distribution of the measurement points in the data space; mapping the measurement points into the abstract signal processing space; determining the one or more features in the abstract signal processing space based on an arrangement of the measurement points in the abstract signal processing space.

By determining the abstract signal processing space by considering the distribution of the measurement points in the data space and mapping the measurement points into the abstract signal processing space accordingly, instead of using a predefined static mapping rule, it is avoided that unnecessary large amounts of data are lost. Moreover, since the features are detected in the abstract signal processing space, the feature detection can be facilitated. For example, a certain arrangement of measurement points in the abstract signal processing space may be indicative for a certain feature in the data space, or the measurement points in the data space may be represented by a smaller amount of mapped measurement points in the abstract signal processing space.

In a further embodiment, the method further comprises detecting the one or more features in the data space based on the one or more features detected in the abstract signal processing space and the sensor data.

With the above, it is possible to obtain information on features in the environment of the vehicle based on features detected in the abstract signal processing space. Thereby, only the mapped measurement points in the abstract signal processing space must be considered, which reduces the required processing power.

In a further embodiment of the invention, the method further comprises: converting the mapped measurement points from the abstract signal processing space into the data space.

By converting (back) the mapped measurement point into the data space, the original set of measurement points can be obtained. Moreover, any information obtained in the abstract signal processing space related to features in the surrounding of the vehicle can be associated with measurement points in the data space, which may improve the detection capabilities of the provided method.

In a further embodiment, the method further comprises: arranging the measurement points being arranged in close proximity to each other with respect to at least one dimension in the data space to locations of close proximity in the abstract signal processing space.

By arranging the measurement points with similar measurement point features/being arranged in close proximity to each other with respect to at least one dimension in the data space to locations of close proximity in the abstract signal processing space, the features can be arranged such that information of the features in the abstract signal processing space can be obtained using the arrangement of the measurement points in the abstract signal processing space. Moreover, topological information (positional information) is maintained in the mapped measurement data.

In a further embodiment, determining the abstract signal processing space further comprises: determining a correlation between the distribution of the measurement points in the data space and a dimension of the abstract signal processing space; and arranging the measurement points in the abstract signal processing space based on the correlation.

By using information of the measurement points in the data space and the dimension of the abstract signal processing space, the measurement points can be particularly arranged, grouped or clustered in the abstract signal processing space without the need of a particular predefined mapping rule. Accordingly, the required data to arrange, group or cluster the data (for example to convey additional information, such as topological information) is comparably low.

In a further embodiment, mapping the measurement points into the abstract signal processing space further comprises: assigning an index to each of the mapped measurement points, the index associating each of the measurement points with corresponding mapped measurement points; and wherein converting the mapped measurement points from the abstract signal processing space into the data space is based on the index.

Through indexing the mapped measurement points such that the measurement points in the data space can be obtained, any information obtained for the mapped measurement points can be transferred directly to the measurement points in the data space. This specifies how features, which are detected in the abstract signal processing space, can be precisely located in the data space and thus in the environment of the vehicle. Moreover, it can be ensured that all of the measurement points in the data space are obtained from the abstract signal processing space, even if the dimensionality of the abstract signal processing space is smaller than the dimensionality of the data space.

In a further embodiment, determining the abstract signal processing space further comprises: setting a number of dimensions of the abstract signal processing space lower than the number of dimensions of the data space, wherein, preferably, the abstract signal processing space is a 2-dimensional space and the data space is a 3-dimensional space.

By having an abstract signal processing space with a dimensionality lower than the dimensionality of the data space, mapping the measurement points into the data space resembles a compression of the high-dimensional data.

In a further embodiment, determining the abstract signal processing space further comprises: setting the number of dimensions of the abstract signal processing space higher than the number of dimensions of the data space, wherein, preferably, the abstract signal processing space is a 4-dimensional space and the data space is a 3-dimensional space.

By having an abstract signal processing space with a dimensionality higher than the dimensionality of the data space, the overall information amount can be increased. For example, in areas of the data space where information is lacking, further information can be assigned such that detection of features in areas with sparse information can be improved.

In a further embodiment, setting the number of dimensions of the abstract signal processing space is performed based on a characteristic of the measurement points in the data space, the characteristic preferably being one or more of a value of the measurement points, the arrangement of the measurement points in the data space, a number of dimensions of the data space and/or a context information obtained based on the measurement points.

By considering a characteristic of the measurement points in the data space to set the number of dimensions of the abstract signal processing space, the abstract signal processing space can be tailored to be suited for the respective measurement data. That is, if the characteristic of the measurement points in the data space indicate that a further dimension is required to provide context information, such as a topological information on the data, the number of dimensions of the abstract signal processing space may be determined accordingly to include the additional information. Similarly, if the characteristic indicates that sufficient data can be provided by reducing the number of dimensions of the abstract signal processing space, the number of dimensions of the abstract signal processing space can be determined accordingly.

In a further embodiment, determining the abstract signal processing space comprises: obtaining information of a previous abstract signal processing space; and determining the abstract signal processing space by further considering the distribution of the measurement points in the data space and the previous abstract signal processing space.

Due to the nature of obtaining high-dimensional data in the environment of a vehicle, two subsequent sets of high-dimensional data obtained subsequently often comprise a large amount of similar measurement points in the data space. Thus, it is likely that a subsequently determined abstract signal processing space will have similar properties as a previous abstract signal processing space. Thus, using information of a previous abstract signal processing space allows to skip the step of determining the abstract signal processing space (or at least reduces the complexity of the step). Consequently, processing power required to determine the abstract signal processing space can be reduced.

In a further embodiment, detecting the one or more features in the abstract signal processing space further comprises: obtaining information on previously detected features; and detecting the one or more features in the abstract signal processing space based on the clustering of the measurement points and previous detected features.

Since two subsequent sets of high-dimensional data likely contain areas with similar information, it is likely that features represented by two subsequent sets of high-dimensional data are present in both sets of data. Thus, by using information of a previously detected feature, the computational complexity of detecting the one or more features in the detection space can be reduced.

In a further embodiment, mapping the measurement points into the abstract signal processing space further comprises: transforming and/or copying the measurement points into the abstract signal processing space.

When mapping the measurement points into the abstract signal processing space, the measurement points may either be transformed into the abstract signal processing space, preferably using a transformation rule, or by merely copying the values of the measurement points in the abstract signal processing space. Thus, a measurement points that is transformed into the abstract signal processing space may carry at least some of the original information of the measurement point in the data space, while a copied measurement point is similar to the initial measurement point in the data space.

In a further embodiment, determining the abstract signal processing space further comprises: determining the abstract signal processing space by considering the distribution of the measurement points in the data space using a self-organizing-maps, SOM, algorithm.

A SOM-based algorithm is particularly well suited for converting data points of one coordinate system into another coordinate system. Moreover, SOM-based algorithms are well suited in clustering/aggregating measurement points in a second space, such as the abstract signal processing space, while possibly reducing the dimensionality of the respective second space. This may allow to reduce the computational complexity of subsequent processing steps.

In a further embodiment, the step of determining the abstract signal processing space further comprises: determining the abstract signal processing space by considering the distribution of the measurement points in the data space using multilayer perceptron, MLP, algorithm.

A supervised algorithm, such as an MLP-algorithm, allows to optimize detection of the abstract signal processing space and mapping the measurement points in the abstract signal processing space using an end-to-end approach. This means that the output of detecting the one or more features in the data space can be used as an input for the next cycle, thereby optimizing the determination of the abstract signal processing space and the mapping even further.

In a further embodiment, detecting the at least one feature in the abstract signal processing space is performed by a pattern recognition algorithm.

In a further embodiment, the measurement points having one or more of a range dimension, an azimuth dimension and/or a doppler velocity dimension.

In a further embodiment, the method further comprises: determining an operating instruction for the vehicle based on the detected features affecting a function of a vehicle assistance system, wherein the function preferably comprises at least one of: displaying the detected feature on a display of the vehicle; conducting a vehicle path planning; triggering a warning; affecting control of the vehicle during a parking process.

The above allows to assist a user of a vehicle by using the method of detecting the one or more features in the environment of the vehicle. For example, in automatically avoiding objects indicated by features in a traffic situation, warning a user of the vehicle from obstacles and/or pedestrians indicated by the features, or aiding a user in parking the vehicle.

Another aspect of the invention is directed to an apparatus comprising means configured to perform the above method.

A further aspect of the invention relates to a computer program comprising instructions, which when executed by a computing system, causing the computing system to perform the above-described method.

Yet another aspect of the invention relates to a vehicle comprising an apparatus configured to perform the above-described method.

**Brief description of the drawings**

Various aspects of the present invention are described in more detail in the following by reference to the accompanying figures without the present invention being limited to the embodiments of these figures.

Fig. 1a    shows a flow chart of an exemplary mapping process.

Fig. 1b    shows a flow chart of an alternative exemplary mapping process.

Fig. 2a    shows a flow chart of an exemplary mapping process using a SOM algorithm.

Fig. 2b    shows a flow chart of an alternative exemplary mapping process using a SOM algorithm.

Fig. 3    shows a flow chart of an exemplary mapping process using a learned process.

Fig. 4    illustrates a linear mapping projection of the range dimension of the 3D tensor into the *UxV* - space,

Fig. 5    illustrates the linear mapping projection of the azimuth dimension of the 3D tensor into the *UxV* - space,

Fig. 6    illustrates linear mapping of the range rate (doppler velocity) dimension of the 3D tensor into the *UxV* - space,

Fig. 7    illustrates mapping of the range dimension of the 3D tensor into the *UxV* - space, using a SOM approach,

Fig. 8    illustrates mapping of the azimuth dimension of the 3D tensor into the *UxV* - space, using the SOM approach,

Fig. 9    illustrates mapping of the range rate (doppler velocity) dimension of the 3D tensor into the *UxV* - space, using the SOM approach,

Fig. 10    illustrates mapping of the range dimension of the 3D tensor into the *UxV* - space, using a learned projection,

Fig. 11    illustrates mapping of the azimuth dimension of the 3D tensor into the *UxV*- space, using the learned projection,

Fig. 12    illustrates mapping of the range rate (doppler velocity) dimension of the 3D tensor into the *UxV* - space, using the learned projection.

**Detailed description**

In the following, background information, prior art methods and aspects of the present invention are described in more detail.

Overview of the Method

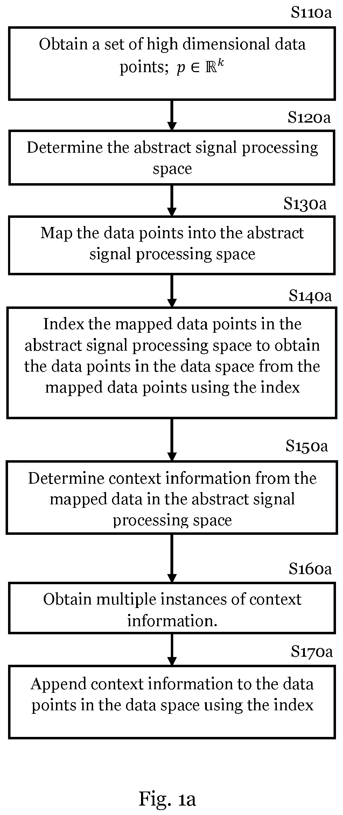

In the following, a method for processing data in abstract embedding, latent spaces are described, according to an embodiment, as shown in Fig. 1a.

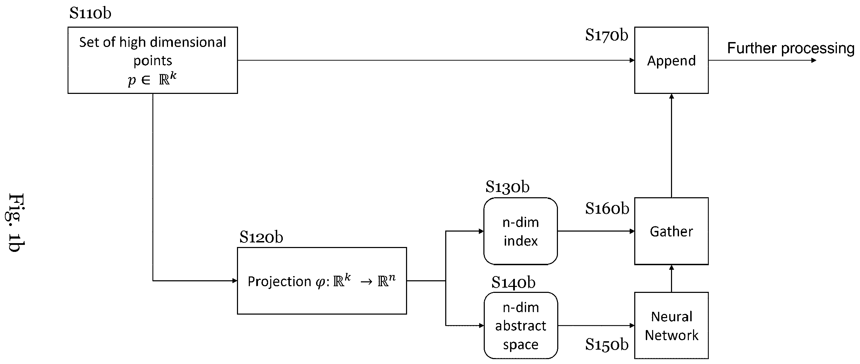

In a first step S110a, a set of high dimensional data points (for example measurement points obtained by a radar) is obtained. The high dimensional data points are arranged in a data space, preferably having the same dimensionality as the high dimensional data points. According to the embodiment shown in Fig 1, the dimensionality of the data space is $k$, wherein preferably $k \geq 2$.

In a second step S120a, an abstract signal processing space, into which the data points are mapped to, is determined. The abstract signal processing space has a dimensionality of n, wherein n may represent any arbitrary dimensionality preferably $n \leq k$. The number of dimensions (dimensionality) of the abstract signal processing space relative to the number of dimensions of the data space may be determined based on a characteristic of the data points in the data space, wherein the characteristic may be indicative of a quality of data point values, or a certain context obtained from the data points. The quality of data point values may indicate whether sufficient data points are present to describe the environment of the vehicle sufficiently, wherein the context may include a certain correlation between data points in the data space.

If the characteristic indicates that there are not sufficient data points to describe the environment of the vehicle, one or more additional dimensions may be added to the abstract signal processing space to provide this additional information. If the characteristic indicates that there are too many data points to further process the data, the abstract signal processing space may be determined with one or more less dimensions than the number of dimensions of the data space, such that the problem of limited resources is overcome. However, the abstract signal processing space may also have the same or higher dimension if a higher dimensionality is beneficial for further processing of the data and to sufficiently describe the environment of the vehicle.

In this particular example, the abstract signal processing space is determined based on a distribution of the data points in the data space. The distribution may be a topological distribution, i.e., a particular arrangement of the data points in the data space, or a statistical distribution, i.e., a value-based distribution of the data points in the data space. A correlation between the dimensionality of the abstract signal processing space and the distribution of the data points in the data space is determined, and/or the abstract signal processing space is determined such that data required for data processing of the data points is arranged in the most beneficial way.

Moreover, additional information may also be considered to determine the abstract signal processing space. For example, if it is determined that the measurement points in the data space represent a certain environment/surrounding, a specific abstract signal processing space may be formed, whereas if it is determined that the measurement points in the data space represent another environment, another specific abstract signal processing space may be formed.

For example, in a scenario where it is determined that in one area of the high dimensional data space a plurality of data points is provided having a similar information (for example, with respect to a dimension of the data points), these points maybe allocated/arranged in a similar region in the abstract signal processing space. These similarities may be predefined or learned by an artificial intelligence engine.

In another example, it could be determined that some areas in the data space having data points that are more relevant than other areas in the data space having data points, for example the data points resembling a known data point distribution pattern or are arranged in a certain area of the data space. In this scenario, the abstract signal processing space could be determined such that these points are emphasized in the abstract signal processing space, for example by determining the abstract signal processing space in a way such that these data points can be allocated to a certain area or in a certain way in the abstract signal processing space.

It could also be determined that data points of one dimension do not provide much value for the further processing of the data. In this scenario, the abstract signal processing space could be determined in a way that the dimension that does not provide much value for the processing of the data is neglected or transformed such that only a part of this dimension's information is carried over to the abstract signal processing space. For example, large numbers of data points having information of a dimension that does not provide additional value for the further processing (such as the feature determination) may be sufficiently represented by a reduced amount of data points in the abstract signal processing space, for example by summing up the values of the data points in the one dimension.

In yet another scenario, if some of the data points of the data space are being arranged in close proximity to one another, the abstract signal processing space could be determined in a way that the data points can be arranged such that this positional information is not lost. This can be done by adding information to the abstract signal processing space, such as a certain value or a specific data information, indicating this positional information, or by arranging the data points in close proximity to each other in the abstract signal processing space, which maintains the initial positional information.

The abstract signal processing space maybe determined dynamically. For example, the abstract signal processing space may be determined in real-time, may be defined by a user, or may be determined based on a training data set using a machine learning engine.

Once the abstract signal processing space is determined, the data points are mapped from the data space to the abstract signal processing space according to a mapping rule $\varphi: \mathbb{R}^k \to \mathbb{R}^n$ S130a, which is determined based on the data points in the data space and the abstract signal processing space, preferably by considering also the content of the further processing.

In an example where the further processing comprises a feature detection application (such as an application for detecting objects or segments in the environment of a vehicle), it could be beneficial to map data points into the abstract signal processing space, such that data points with a similar data point feature with respect to at least one dimension in the data space are arranged/mapped to locations of close proximity in the abstract signal processing space.

Similarly, if it is determined that some areas in the data space having data points are more relevant than other areas in the data space having data points, the data points may be mapped in an area of the abstract signal processing space where detection of the more relevant data points is facilitated.

If the further processing comprises pre-processing of radar data for feature detection it could be preferable to map the data points such that detection of a person, tree or vehicle or semantic segmentation (characterizing features/areas in the environment) is facilitated. For example, in radar data applications, the data point density in close proximity to the radar sensory is larger than the data point density in a large distance from the sensor (due to the propagation of radar beams). That is, when radar beams are transmitted in intervals of 1° from the radar sensor, at a short distance from the radar sensor, the distance between the individual beams may be in the centimeter range, wherein at a large distance, the distance between individual beams maybe around 30-40 cm. If a person or a traffic light (or any other object or obstacle) is located in the large distance, it could be impossible or at least hard to detect this feature. In such a case, the mapping rule $\varphi$ may be determined such that some data points close to the radar sensor are less prioritized and data points in the large distance to the radar sensor are higher prioritized (i.e., the data points or at least a large portion of the data points are mapped into a certain area of the abstract signal processing space).

Mapping the data points from the data space to the abstract signal processing space may be performed by transforming the data points based on a transformation rule, or by copying the data points to specific positions the abstract signal processing space. The transformation rule, again, may be determined based on any of the above requirements for determining the abstract signal processing space and/or mapping the data into the abstract signal processing space. A measurement point that is transformed into the abstract signal processing space may carry at least some of the original information of the measurement point in the data space, while a copied measurement point is similar to the initial measurement point in the data space. After being transformed or copied, the data points are allocated in the n-dimensional abstract signal processing space.

Preferably, when the data points are mapped to the abstract signal processing space, the positions of the data points in the data space are stored and a correlation between the original data points in the data space and the mapped data points in the abstract signal processing space is obtained. In particular, the mapped data in the abstract signal processing space is indexed in such a way that the original data points in the data space can be obtained from the mapped data points in the abstract signal processing space using the index in step S140a.

Additionally, if the data is mapped from high dimensional data space with a high dimensionality to an abstract signal processing space with a lower dimensionality, multiple data points from the data space could be mapped to one single position in the abstract signal processing space. In such a scenario, a collision handling rule may be determined, wherein collisions of mapped data points in the abstract signal processing space having the lower dimensionality are avoided. For example, one collision handling rule may determine that multiple data points that are mapped to the same position in the abstract signal processing space are added up. In this case, a transformation rule and the respective indexes may be obtained and/or stored, such that at a later point, the original data points in the data space can be obtained based on the mapped data point obtained by the addition and the respective indexes and/or the transformation rule. In another example, similar values may be allocated to a certain position in the abstract signal processing space and be represented by a single data point in the abstract signal processing space. In this case a transformation rule must be considered from each of the data points in the data space can be obtained from the single data point in the abstract signal processing space. In one embodiment, the step of mapping the high dimensional data into the abstract signal processing space is performed by a machine learning engine.

In step S150a, context information is obtained from the mapped data in the abstract signal processing space, wherein the context information represents points of interest in the original data points in the data space or a certain relation of data points in the data space and/or the abstract signal processing space. For example, in a case where positional information from the original data points in the data space is maintained in the mapped data points in the abstract signal processing space, the positional information maybe obtained in the abstract signal processing space and the context information may be obtained using the positional information and the mapped data points in the use the positional information and the mapped data points to obtain. In this example, the context information represents information of the mapped points in the use the positional information and the mapped data points to obtain as well as information on the positional relationship of the data points in the data space.

In one exemplary embodiment, a particular arrangement of data points in the abstract signal processing space are known to be indicative of a certain feature in the data space. In this case, the arrangement in the abstract signal processing space maybe detection and the respective context information may be obtained (for example, context information indicating a certain feature in the data space). These arrangements of data points in the abstract signal processing space may be similar to the arrangements of the data points in the data space or be arranged in a different way. For example, the mapped data points in the abstract signal processing space maybe arranged in a way which is indicative of a certain feature in the data space but is arranged in a more abstract way which may be easier to be interpreted, for example by a feature detection algorithm or a machine learning engine. Since the mapped data is mapped/arranged such that performing certain tasks is improved (facilitated), obtaining context information in the abstract signal processing space is easy, when compared to obtaining similar information in the data space. In one embodiment, the step of obtaining context information is performed by a machine learning engine.

Subsequently, in step S160a, multiple instances of context information may be obtained from the abstract signal processing space and gathered. Moreover, if multiple abstract signal processing spaces, preferably having a lower dimensionality, are determined for a data space with a higher dimensionality, context information may be obtained from each of the abstract signal processing spaces and gathered/collected accordingly.

From the gathered context information, in step S170a, the context information is appended to original data points in the data space, using the indexes. In doing so context information back is conferred back onto the original data points in the data space, without having to obtain the context information directly from the original data in the data space. If desired, the obtained information on the original data points may be used for further processing. For example, the context information and the data points in the data space may be used to detect objects or perform segmentation in the environment of the vehicle. Performing segmentation in the environment of the vehicle relates to segmenting the environments into one or more segments, wherein each of the segments correlates with an area in the environment having a similar characteristic. For example, a certain arrangement of objects in a distance maybe considered as segment, or a foreground and a background of the environment of the vehicle may be considered as respective segments etc.

It is to be noted that the further processing can be performed on a plurality of data points and/or pointwise, i.e., without considering other data points, as the context is already obtained.

Fig. 1b depicts an alternative flow chart of an exemplary mapping process. In step S110b, a set of high dimensional data points (for example measurement points obtained by a radar) is obtained, similar as in step S110a of Fig. 1a. In step S120b, a determined projection, preferably determined by an artificial intelligence engine similar to step S120a, may be used to map the data points into an abstract signal processing space defined by the determined projection. In step S130b, an n-dimensional index, in conformity with the dimensionality of the abstract signal processing space, may be determined associated with the data points mapped according to the projection. The index may associate the mapped points with the data points with the high dimensional data points. Preferably in parallel, in step S140b, the data points are mapped into the abstract signal processing space. In step S150b, a further artificial intelligence engine may be used to identify features, e.g., in terms of context information, reflecting obstacles, walls, pedestrians and the like, based on an arrangement of the mapped data points in the abstract signal processing space. Afterwards, in step S160b, the indexes and the identified features may be gathered. Then, in step S170b, the identified features may be appended to the high dimensional data points based on the indexes. The output of this step may then be used for further processing.

SOM-based projection

As indicated above, the steps of determining the abstract signal processing space and mapping the data points to the abstract signal processing space can be performed by an artificial intelligence engine. In particular, determining the abstract signal processing space and mapping the data points can be learned by means of the artificial intelligence engine.

In the following, one aspect of the step of detecting the abstract signal processing space and mapping the data points to the abstract signal processing space will be described, according to an exemplary embodiment. In this embodiment, for the purpose of reducing the dimensionality of the data and thereby compressing the data, a so called Self-organizing maps (SOM) algorithm is used for the steps of determining the abstract signal processing space and mapping the data points into the abstract signal processing space. SOMs are unsupervised neural networks that are designed to map high-dimensional input data to a lower dimensional space while preserving the topological properties of the high dimensional input space. In view of the above-described method, this means that the SOM is designed to map the data points from the data space into the abstract signal processing space, wherein $k \geq n$.

The training algorithm of the SOM aims at maintaining a topological structure of high dimensional data points in a lower dimensional space used for further analysis by grouping data points whose features are similar (for example, in terms of a distance metric) close together (for example, by aggregating the data points into clusters). That is, the SOM is learned using an input dataset high dimensional data for the SOM to train on (such as radar data), wherein the SOM is trained based on the distribution of the data points in the dataset. Typically, areas where a lot of points are present in the dataset, a larger area of the space obtained by the SOM will correspond to that area. Therefore, these areas are finer/higher resolved in the SOM than others and information can be extracted/acquired in a more precise way.

This allows to reduce the dimensionality of the original data points, while reducing the loss of original information. The SOM based approach is particularly suited to preserve the topological (positional) information of the data points, while reducing the complexity of the overall data. Moreover, by allocating similar data to similar positions in the lower dimensional space used for data processing (here, the abstract signal processing space), the high dimensional data is visualized and analyzed easier.

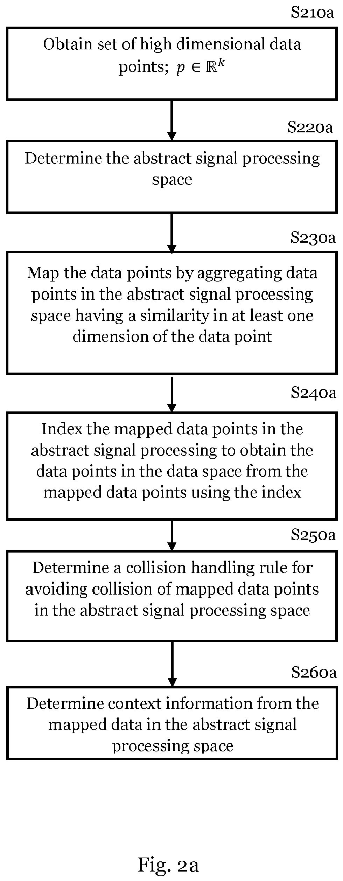

In Fig. 2a, a flow diagram of one embodiment of determining the abstract signal processing space and mapping the data to the abstract signal processing space is depicted using a SOM-based projection.

In step S210a, a set of high dimensional data points (for example measurement points obtained by a radar) is obtained. The high dimensional data points are arranged in a data space, preferably having the same dimensionality as the high dimensional data points. According to the embodiment shown in Fig 1, the dimensionality of the data space is $k$, wherein preferably $k \geq 2$.

In step S220a, the abstract signal processing space is determined. In this example of a SOM based projection, the $k$-dimensional original data in the data space is mapped into the abstract signal processing space, which is represented by a two-dimensional space having the coordinate axes $U$ and $V$. Preferably, the abstract signal processing space is determined by considering a distribution of the measurement points in the data space using the SOM based artificial intelligence engine.

Afterwards, in step S230a, the high dimensional input data (data points in the data space) are mapped by the SOM to the abstract signal processing space by aggregating and rearranging the data points into the abstract signal processing space based on similar topological features, such as a similarity in at least one dimension of the data point. Similar to the embodiment of Fig. 1a, the mapped data points are indexed to obtain the original data in the data space from the mapped data points using the indexes (S240a).

Since compressing the data from a higher dimensional space to a lower dimensional space could lead to multiple data points pointing to the same location (index) in the abstract signal processing space, a collision handling rule is determined/applied by the SOM-based algorithm in step S250a. In this example, the collision handling can be a method (like adding up conflicting values and maintaining the respective indexes and/or a meta information on the added-up values) or a neural network that learns combining conflicting data points. Moreover, the collision handling may also comprise a transformation rule defining a rule to obtain a plurality of data points in the data space from a single data mapped data point in the abstract signal processing space.

The final map is subjected to a consecutive neural network, which is configured to obtain context information from the mapped data points in the abstract signal processing space in step S260a. Due to the clustering/aggregating of the data points in the abstract signal processing space, obtaining the context information is facilitated.

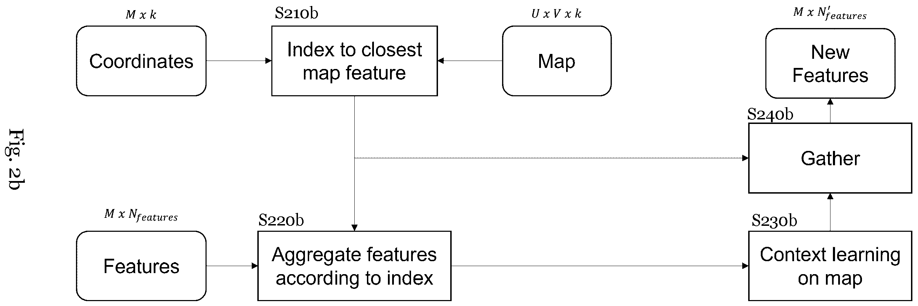

Fig 2b further illustrates the operation of a SOM to learn the mapping for the purpose of dimensionality reduction in an exemplary way. In step S210b, high dimensional data points (e.g., measurement points) with coordinates $M$ in an $k$-dimensional space are mapped to $k$ maps with dimensions U and V with the aim to map points whose data point features (e.g., azimuth, range or doppler in terms of radar data) are similar close together (in terms of distance metric) and vice versa. In step S220b, the data points may be aggregated according to an aggregation method, wherein the position of the data points define the position in the $U \times V$ map and if collisions occur, the aggregation function determines how to combine/aggregate the features. This aggregation may be necessary, as multiple data points can point to the same location (index) in the map. To resolve this conflict, the aggregation method can be a classical method (like mean) or a neural network that learns combining the conflicting features. The final map is subject to a consecutive neural network applied in step S230b, which can be assigned to the original coordinates by identifying and gathering, according to step S240b, features at the corresponding locations indicated by the index. The results are features containing contextual information learned on the map produced by a SOM algorithm.

Learned projections

A second approach for determining the abstract signal processing space and mapping the original data points from the data space to the abstract signal processing space is to embed determining the abstract signal processing space and the mapping rule φ into a larger artificial intelligence engine trained for some specific objective, e.g., object detection or semantic segmentation.

In this case, determining the abstract signal processing space and mapping the data points into the abstract signal processing space is represented by a neural network block. The weights of this neural network are learned during the training of the main objective in an end-to-end manner. An end-to-end manner means that the machine learning engine learns all intermediate steps between the input and the output. In this case, the machine learning engine obtains data points of the data space (input) and is supposed to determine the position of features o the data points in the abstract signal processing space. The design of the abstract signal processing space and the mapping rule into the abstract signal processing space is learned in a way that the feature determination in the abstract signal processing space is performed in an optimal way (using less data points may be more efficient).

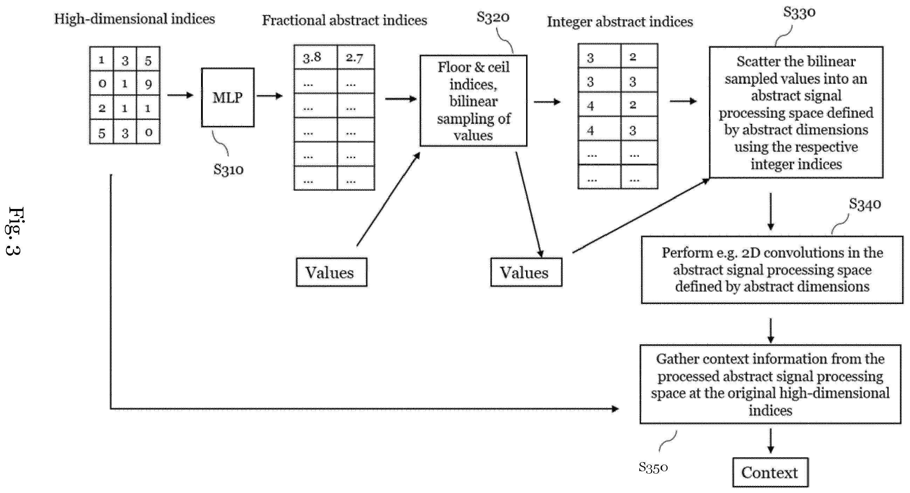

Fig. 3 shows such a learned projection, according to an exemplary embodiment. In this embodiment, 3D data is transformed into 2D data and context information is obtained from the resulting 2D data.

In step S310, a multilayer perceptron (MLP) transforms each of the original 3D-indices into a 2D fractional mapped index. In general, a MLP is a function that maps inputs to outputs. In this example, the input of the MLP/function is a 3D vector, and the output is a 2D vector.

The MLP in general comprises of an activation function, one or more layers (an input layer, and output layer and one or more hidden layers) of nonlinearly activating nodes, wherein each node associates a weight function to following nodes in a following layer. Thus, MLP is differentiable and continuous with respect to the inputs and weights. The learning occurs by changing the weights of the nodes after each iteration of data processing, based on the error in the output compared to the expected result.

Due to the nature of the MLP, small changes to the inputs cannot result in arbitrary large changes in the outputs. Thus, small adaptions on the weights can only result in small changes on the output such that the resulting output may not be necessarily an integer value.

Thus, in Step S320, each of the fractional indices is then transformed into four integer indices by combining the roundups and round-downs of both of its components (flooring and ceiling) and the values corresponding to the original data points are bilinearly sampled.

By scattering the sampled values at the integer indices (S330), a 2D grid of is obtained in the abstract signal processing space.

In Step S340, data in the abstract signal processing space is then further processed using e.g., a 2D convolutional neural network (CNN) to collect context information of the scattered values in the abstract signal processing space, such as a pattern recognition algorithm. This step may be performed using a separate artificial intelligence engine or the MLP.

Finally, the mapped indices, which directly correspond to the original 3D indices are then used to gather this contextual information for further usage in step S350.

Since the learned projection relates to a supervised learning method, the output values generated by this approach may be used as inputs for optimizing the learned projection. Consequently, the abstract signal processing space and the mapping may be determined/performed by considering the input data points, preferably a distribution of the input data points, and also a previous abstract signal processing space and/or a previous mapping.

Since in the steps of determining the abstract signal processing space and mapping the data points into the abstract signal processing space as well as the further processing may be performed using the same artificial intelligence engine, both the determining of the abstract signal processing space and the respective mapping of the data points can be optimized for the respective further processing. For example, if the further processing is a process related to feature detection based on the initial data, the projection maybe learned in a way that feature detection is more precise/facilitated. In particular, the artificial intelligence engine can learn which data is more relevant for good feature detection results, and which data is less important.

Application in vehicle assistance systems

In the following, the method as described with reference to Fig. 1a will be exemplified with reference to radar data as the high dimensional input data points, according to an exemplary embodiment. The radar data will be processed by a vehicle assistance system, preferably for feature detection in an environment of the vehicle to increase the safety of a user and/or assist the user of the vehicle.

To obtain the radar data points, a radar signal, which is based on an electromagnetic wave, is emitted from at least one radar emitter, reflected from a surface of a feature in the surrounding environment and received by a radar detector. In the following, an arrangement capable of detecting radar signals, and preferably also emitting radar signals, will be referred to as a radar sensor. Typically, in vehicle applications, one or more radar sensors are used and arranged as a radar array.

Radar data obtained by the one or more radar sensors is usually presented in a discrete manner, i.e., the data builds a high dimensional cube. For example, in vehicle applications, 3D tensors (3D cubes) comprising the three dimensions consisting of range, azimuth (angle), and doppler (velocity) are commonly used. The range dimension represents the distance from the radar sensor to a feature, the azimuth dimension represents an angle from the radar sensor to the feature, wherein in vehicle applications, generally, the direction corresponding to an angle of o° represents the direction into which a vehicle is moving, and the doppler velocity represents the relative velocity of a feature relative to the radar sensor. With the information encoded in the 3D tensors, it is possible to obtain the velocity and the position of any features in the environment of the radar sensor at any given time. However, since it is desired to obtain a complete description of the environment surrounding the radar sensor, large amounts of data points have to be obtained to be able to fully describe the environment of the vehicle.

By applying the method described with reference to Fig. 1a, the radar data can be obtained and analyzed in real-time. In this embodiment, the high dimensional (input) data points in the data space are represented by radar data.

That is, the high dimensional data points correspond to radar data (points), i.e., measurement points obtained by at least one radar sensor, wherein the measurement points are arranged in 3D tensors comprising a range dimension, an azimuth (angle) dimension, and a doppler velocity dimension, in a 3D data space.

After the 3D tensor comprising the measurement points is obtained, the abstract signal processing space, into which the data points are to be mapped into, is determined based on the distribution of the measurement points in the 3D tensor. As described above, this can be performed by a predefined abstract signal processing space or by means of an artificial intelligence engine, such as the unsupervised SOM-approach or the supervised learned projection, which determines the abstract signal processing space dynamically. In this particular example, it is defined that the measurement points from the 3D data space will be mapped into three individual abstract signal processing spaces with abstract coordinate axes $U$ and V (2-D, $U x V$- space). The abstract signal processing spaces are determined such that each of the dimensions of the 3D tensor (the range dimension, the azimuth dimension, and the doppler velocity dimension) are mapped into one of the abstract signal processing spaces individually.

After determination of the abstract signal processing spaces, the measurement points obtained from the radar data will be mapped from the data space into the abstract signal processing space. As indicated above, this can also be performed by applying predefined mapping rules or by an artificial intelligence engine, such as the unsupervised SOM-approach or the supervised learned projection. In this example, all three options have been applied such that the results of the mapping can be compared to provide further insight on the mapping process.

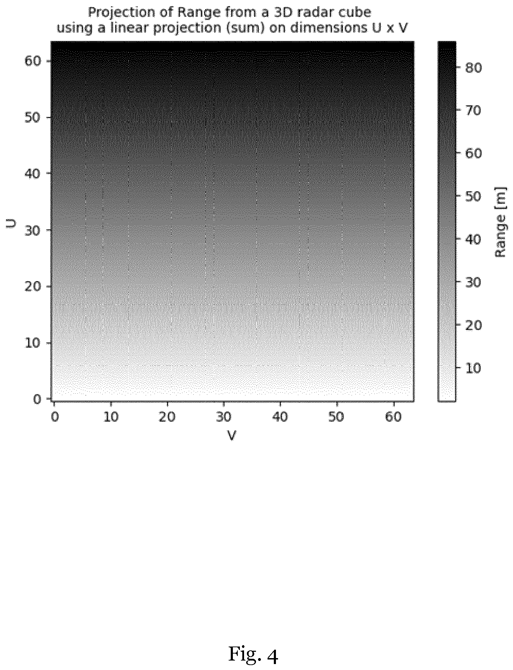

The results of individual mapping methods are shown in Figs. 4 to 12. In each of the graphs a dimension of the 3D data cube is mapped into a two-dimensional space.

Figs. 4 to 6 show the mapping results when using a state-of-the-art, pre-defined mapping rule for mapping each of the values represented by an individual coordinate in the 3D tensor corresponding to the radar data.

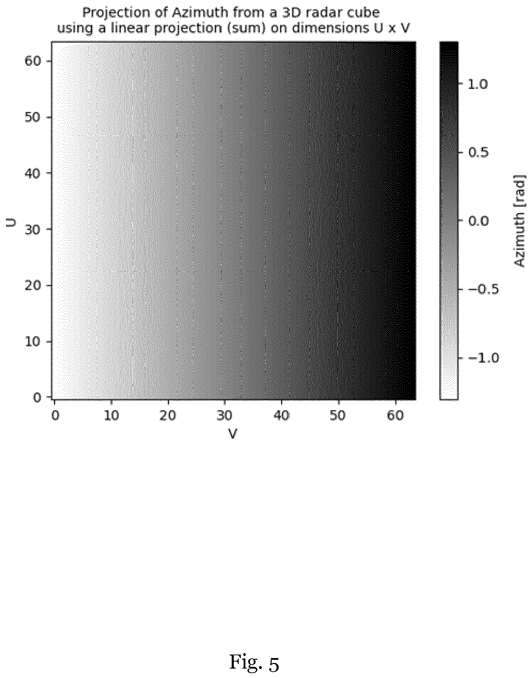

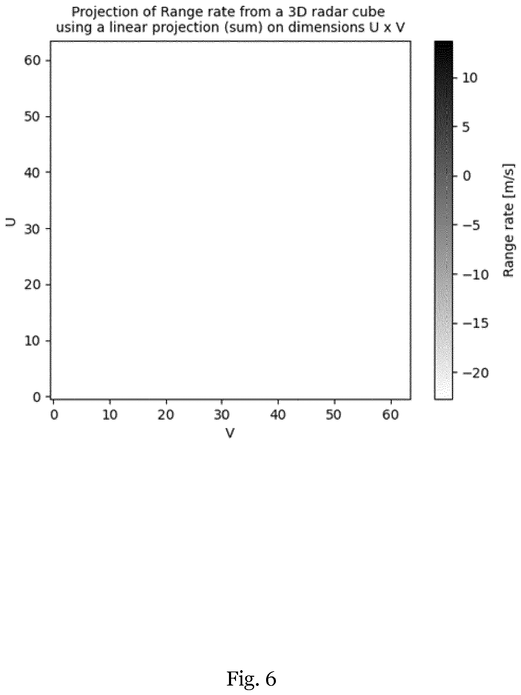

Fig. 4 represents the linear mapping projection of the range dimension of the 3D tensor into the *U x V*- space, Fig. 5 represents the linear mapping projection of the azimuth dimension of the 3D tensor into the *U x V* - space and Fig. 6 represents the linear mapping of the range rate (doppler velocity) dimension of the 3D tensor into the *U x V*- space. The linear projection of Figs. 4 to 6 is performed by arranged each of the dimensions into an individual 2D space having the dimensions *U x V,* wherein *U* corresponds to the range dimension and V corresponds to the angle. As can be seen from Figs. 4 and 5, the range and angle values of the respective graphs increase with an increase in the *U* and *V* coordinates in a linear way. Since the each of the dimensions of the 3D radar cube are mapped into the range and azimuth dimensions, the range rate (the doppler velocity) is not represented in Fig. 6, as the doppler velocity does not have any influence of the mapping to the *U x V*- space (on the range - angle dimensions).

Accordingly, using this linear mapping rule, the overall amount of information is reduced (the 2D abstract data space corresponding to the range-range may be disregarded in further processing). Even though the processing power of the further processing can be reduced this way (it is not necessary to process the range-rate data), at least the information related to the doppler velocity is lost.

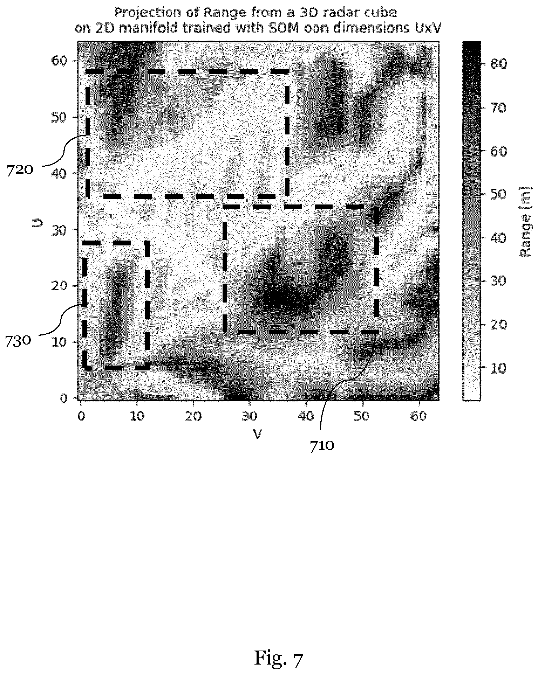

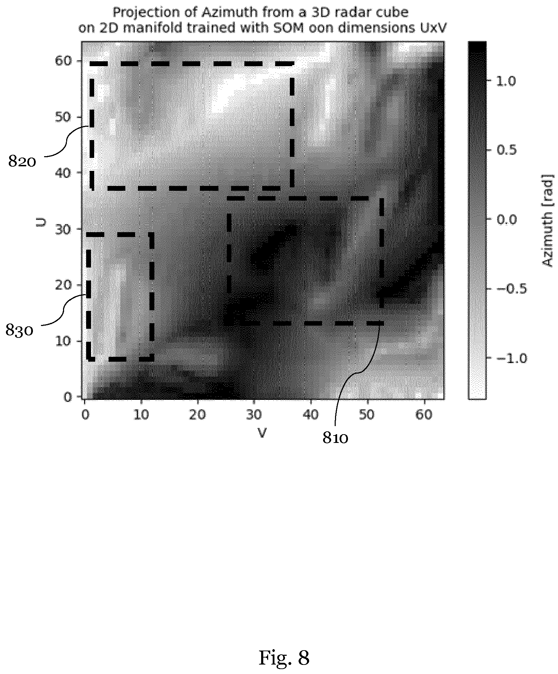

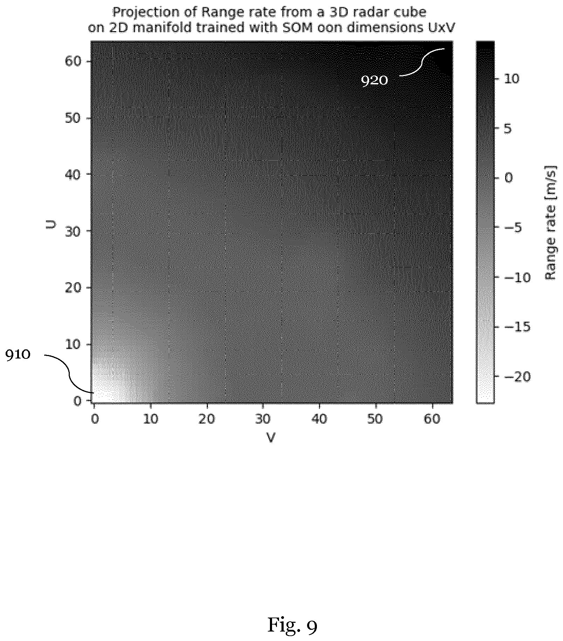

Figs. 7 to 9 show the mapping of the measurement points according to a mapping rule obtained based on the determination of the abstract signal processing space and the distribution of the measurement points in the data space using a SOM approach as described with reference to Fig. 2a. Fig. 7 shows the mapping of the range dimension of the 3D tensor into the *U x V*- space, using the SOM approach, Fig. 8 shows the mapping of the azimuth dimension of the 3D tensor into the *U x V*- space, using the SOM approach and Fig. 9 shows the mapping of the range rate (doppler velocity) dimension of the 3D tensor into the *U x V*- space, using the SOM approach.

As can be seen from Fig. 7 and 8, the data corresponding to the range and azimuth dimensions are clustered in the *U x V*- space (the abstract signal processing space). While the overall number of measurement points in the *U x V*- space appear to be somewhat similar to the number of measurement points in the respective linear projection *U x V*- spaces, the clustering of similar measurement points can facilitate further processing. For example, as described above, further processing, such as feature detection, will be performed on the mapped data in the *U x V*- space. Since information corresponding to similar properties in the data space are clustered, a feature detection engine performing the feature detection, may prioritize certain points comprising measurement points having similar properties and disregard others. For example, if some of the clusters represent information in areas that are particularly relevant, i.e., represent an area that the vehicle will likely reach in a certain time, the feature detection engine may prioritize the corresponding measurement points. Moreover, if clusters represent areas that are not as relevant for the vehicle assistance system (for example the measurement points correspond to an area located in a large distance away from the vehicle or to an area that is not accessible for the vehicle) these clusters (i.e., chunks of measurement points in the *U x V*- space) maybe disregarded. Moreover, it is much easier for the feature detection engine to detect/interpret measurement points that are arranged in a cluster, when compared to measurement points that are sparsely or evenly distributed in the *U x V*- space (abstract signal processing space). Moreover, the SOM based projection may cluster/arrange data points in the abstract signal processing space in a way such that the specific clusters/arrangements of mapped data points represent certain features in the data space in an abstract/beneficial way, wherein detecting and determining features in the is easier in the abstract signal processing space using the representations of the features in the abstract signal processing space than in the data space.

In Fig. 7 three exemplary arrangements of data points are shown, according to a SOM-based projection of the range. A first arrangement in terms of a cluster of high valued range data points is depicted in area 710 corresponding to the coordinates of (40, 20). A second arrangement in terms of a cluster, consisting of equal shares of low and high valued data points, can be seen in area 720 corresponding to the coordinates of (20, 40). A third arrangement can be seen in area 730 corresponding to coordinates (10, 10).

In Fig. 8 three exemplary arrangements of data points are shown according to SOM-based projection of the azimuth. A first arrangement of high valued range data points is arranged in area 810 corresponding to the coordinates of (40, 20). A second arrangement, consisting of equal shares of low and high valued data points, can be seen in area 820 corresponding to the coordinates of (20, 40). A third arrangement can be seen in area 830 corresponding to coordinates (10, 10).

As can be seen from Figs. 7 and 8, one instance of the abstract signal processing space representing a first dimension of the data points in the data space may correlate with another instance of the abstract signal processing space representing another dimension of the data space. This allows improve the detection rate of features in the further processing step. For example, the abstract signal processing space and the mapping of the data points from the data space to the abstract signal processing space may be performed in a similar fashion with respect to a mapping of the range data and a mapping of the azimuth data. For example, topological information of the 3D data may be carried over and maintained in the abstract signal processing space. For example, while each of the abstract signal processing space in Fig. 7 and 8 represent a single dimension of the data space, it can be seen that some topological information of the 3D data is maintained in the individual abstract signal processing spaces, as some of the arrangements in the projection shown in Fig. 7 seem to be present in the projection shown in Fig. 8. That is, when comparing the arrangement of the data points in the spaces, the first arrangements of high value points can be seen in the areas 710, 810 close to the (40,20) coordinate almost in the center of the $U \times V$- space in both, Figs. 7 and 8. The second arrangements in areas 720, 820 consisting of equal shares of low and high valued data points can also be seen in both Figs. 7 and 8. Moreover, a similar elongated aggregation of data points can be seen in the areas 730, 830 of the (10,10) to (10,20) coordinates in both Figs. 7 and 8.

The similar aggregation of mapped points in the same areas in both projections (azimuth and range) may be an indicator of a certain context, or of a certain feature in the data space.

The feature detection processing engine may use the information obtained in both abstract signal processing spaces (shown in Figs. 7 and 8) for detecting features in the abstract signal processing space indicative of features in the data space. The representation of the features in the abstract signal processing space does not necessarily be similar to features in the data space but may be an abstract representation of the features in the data space, wherein the abstract representation is determined by the further processing engine. With regards to the doppler velocity, the SOM-based projection learned a linear mapping of the doppler values (increase in value from lower left area 910 to upper right area 920, depicted in Fig. 9).

The above mapping results show that by using the SOM-based approach, required the processing power for performing feature detection (or other processing) of the measurement points can be significantly reduced, while the features are detected in a more efficient way. That is, the mapping is performed in a way that feature detection is facilitated, and certain critical values are highlighted. Moreover, even though large amounts of measurement points are maintained, the measurement points may be arranged in a way that a subsequent processing may be instructed to disregard certain clusters of measurement points, such that the effective amount of measurement points decreases.

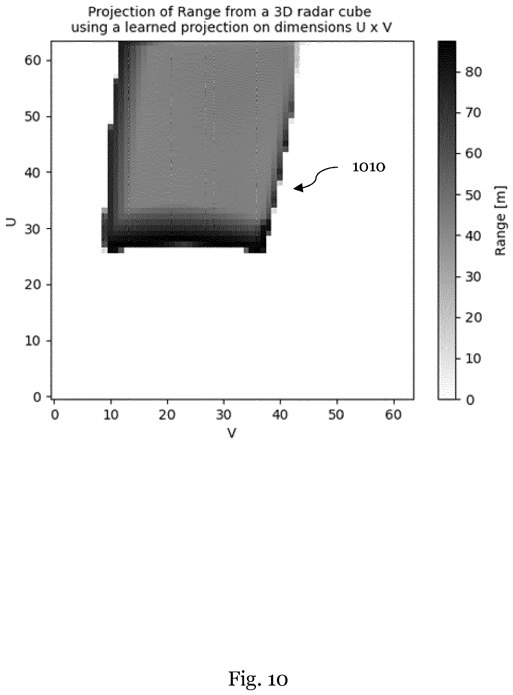

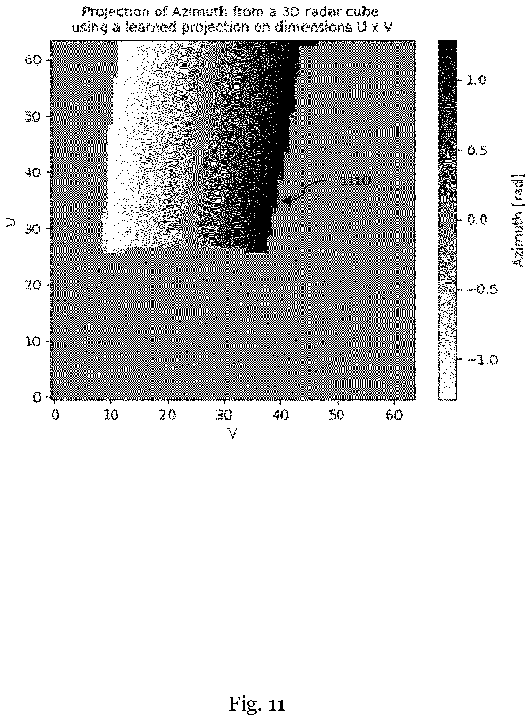

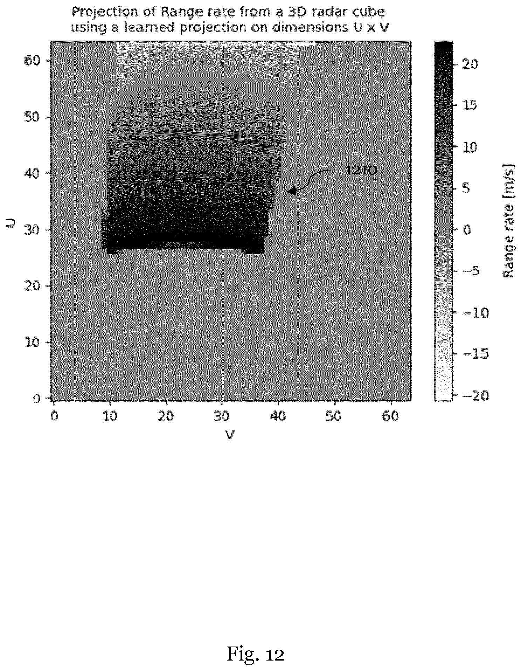

Figs. 10 to 12 show the mapping results of a learned projection, according to an exemplary embodiment, which is obtained as described with reference to Fig. 3. Fig. 10 shows the mapping of the range dimension of the 3D tensor into the $U \times V$- space, using the learned projection, Fig. 11 shows the mapping of the azimuth dimension of the 3D tensor into the $U \times V$- space, using the learned projection and Fig. 12 shows the mapping of the range rate (doppler velocity) dimension of the 3D tensor into the $U \times V$ - space, using the learned projection.

As can be seen in Figs. 10 to 12, the abstract signal processing space is determined such that measurement points are only mapped to part of the $U \times V$-space available for mapping measurement points.

In each of Figs. 10 to 12, it can be seen that an $80 \times 80$ set of input data is mapped into a mere $25 \times 25$ area in the $U \times V$- space.

For example, the projection shown in Fig. 10 maps the $80 \times 80$ set of input data into a $25 \times 25$ area in the $U \times V$ - space 1010, wherein mostly high range values are mapped.

In the projection shown in Fig. 11, the $80 \times 80$ set of input data is mapped into a $25 \times 25$ area in the $U \times V$- space 1110, wherein low to high values are mapped in somewhat equal parts.

In the projection shown in Fig. 12, the $80 \times 80$ set of input data is mapped into a $25 \times 25$ area in the $U \times V$- space 1210, wherein mostly high doppler values are mapped.

In this example, the MLP based projection may have determined that the $25 \times 25$ data points in the abstract signal processing space are sufficient to describe the features in the $80 \times 80$ data space. For example, by transforming multiple input values to a single mapped value in the abstract signal processing space, wherein the mapped value in the abstract signal processing space may be a representation of multiple values (for example by summing up the values) or averaging the value (as described with reference to Fig. 3) that represents a similar values as multiple data points in the data space. It is immediately apparent that the number of data points in the abstract signal processing space is highly reduced and feature detection in the abstract signal processing space is facilitated. Similar to above, the feature detection in the abstract signal processing space may be based on an abstract arrangements/aggregation of data points.

By applying the above method in vehicle assistance systems, the vehicle assistance systems may perform the actual feature detection based on the optimized measurement data in the abstract signal processing space, as described above. That is, the one or more features in the environment of the vehicle can be determined using another artificial intelligence engine to obtain the context information and thereby identify the objects in the abstract signal processing space base done the mapped measurement points, or by using the same artificial intelligence engine that has also performed the steps of determining the abstract signal processing space and the mapping of the measurement data into the abstract signal processing space.

Once the one or more features in the environment of the vehicle are determined/detected (after being identified in the abstract signal processing space and using the indexes to the measurement data space the features are detected in the data space), the vehicle assistance system may trigger one or more actions. Such actions may be any action performed by vehicle assistance systems, in particular, in view of obtained data concerning the environment of the vehicle. That is, the vehicle assistance system may determine an operating instruction for the vehicle based on the identified features affecting a function of a vehicle assistance system such as one or more of: displaying the identified feature on a display of the vehicle and/or conducting a vehicle path planning, for example to avoid the feature automatically without the need of a further control operation from the user and/or triggering a warning to the user and/or affecting control of the vehicle during a parking process. Furthermore, the vehicle assistance system may be used to classify the identified features, such that the vehicle assistance system is able to distinguish between different type of detected objects or obstacles, like walls, trees, pedestrians, other vehicles, bikes, motorbikes, traffic lights, traffic signs, road boarders, parking slots etc.

The method according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. A computer-implemented method for determining one or more features of a surrounding of a vehicle, the method comprising the steps of:

   obtaining sensor data comprising measurement points, the measurement points being arranged in a data space;
   determining an abstract signal processing space based on a distribution of the measurement points in the data space;
   mapping the measurement points into the abstract signal processing space; and
   determining the one or more features in the abstract signal processing space based on an arrangement of the measurement points in the abstract signal processing space.

2. The method according to the preceding claim, further comprising:
   detecting the one or more features in the data space based on the one or more features determined in the abstract signal processing space and the sensor data.

3. The method according to any one of the preceding claims, further comprising:
   converting the mapped measurement points from the abstract signal processing space into the data space.

4. The method according to any one of the preceding claims, wherein mapping the measurement points further comprises:
   arranging the measurement points being arranged in close proximity to each other with respect to at least one dimension in the data space to locations of close proximity in the abstract signal processing space.

5. The method according to any one of the preceding claims, wherein determining the abstract signal processing space further comprises:

   determining a correlation between the distribution of the measurement points in the data space and a dimension of the abstract signal processing space; and

arranging the measurement points in the abstract signal processing space based on the correlation.

6. The method according to claim 3, wherein mapping the measurement points into the abstract signal processing space further comprises:

assigning an index to each of the mapped measurement points, the index associating each of the measurement points with the corresponding mapped measurement points; and

wherein converting the mapped measurement points from the abstract signal processing space into the data space is based on the index.

7. The method according to any one of the preceding claims, wherein determining the abstract signal processing space further comprises:

setting a number of dimensions of the abstract signal processing space lower than the number of dimensions of the data space, wherein, preferably, the abstract signal processing space is a 2-dimensional space and the data space is a 3-dimensional space; or

setting the number of dimensions of the abstract signal processing space higher than the number of dimensions of the data space, wherein, preferably, the abstract signal processing space is a 4-dimensional space and the data space is a 3-dimensional space.

8. The method according to the preceding claim, wherein setting the number of dimensions of the abstract signal processing space is performed by considering a characteristic of the measurement points in the data space, the characteristic preferably being one or more of a value of the measurement points, the arrangement of the measurement points in the data space, a number of dimensions of the data space and/or a context information obtained based on the measurement points.

9. The method according to any one of the preceding claims, wherein determining the abstract signal processing space further comprises:
determining the abstract signal processing space by considering the distribution of the measurement points in the data space using a self-organizing-maps, SOM, algorithm.

10. The method according to any one of claims 1 to 8, wherein determining the abstract signal processing space further comprises:
determining the abstract signal processing space by considering the distribution of the measurement points in the data space using a multilayer perceptron, MLP, algorithm.

11. The method according to claims 9 or 10, wherein determining the one or more features in the abstract signal processing space is performed by a pattern recognition algorithm.

12. The method according to any one of the preceding claims, wherein the method further comprises:
determining an operating instruction for the vehicle based on the determined features affecting a function of a vehicle assistance system, wherein the function preferably comprises at least one of:

- displaying the determined feature on a display of the vehicle;
- conducting a vehicle path planning;
- triggering a warning;
- affecting control of the vehicle during a parking process.

13. An apparatus comprising means configured to perform the method of any of the claims 1 to 12.

14. A computer program comprising instructions, which when executed by a computing system, causing the computing system to perform the method of any of the claims 1 to 12.

15. A vehicle comprising an apparatus according to claim 13.

S110a

Obtain a set of high dimensional data points; $p \in \mathbb{R}^k$

S120a

Determine the abstract signal processing space

S130a

Map the data points into the abstract signal processing space

S140a

Index the mapped data points in the abstract signal processing space to obtain the data points in the data space from the mapped data points using the index

S150a

Determine context information from the mapped data in the abstract signal processing space

S160a

Obtain multiple instances of context information.

S170a

Append context information to the data points in the data space using the index

Fig. 1a

Fig. 1b

S210a

Obtain set of high dimensional data
points; $p \in \mathbb{R}^k$

S220a

Determine the abstract signal processing
space

S230a

Map the data points by aggregating data
points in the abstract signal processing
space having a similarity in at least one
dimension of the data point

S240a

Index the mapped data points in the
abstract signal processing to obtain the
data points in the data space from the
mapped data points using the index

S250a

Determine a collision handling rule for
avoiding collision of mapped data points
in the abstract signal processing space

S260a

Determine context information from the
mapped data in the abstract signal
processing space

Fig. 2a

Fig. 2b

High-dimensional indices

| 1 | 3 | 5 |
| 0 | 1 | 9 |
| 2 | 1 | 1 |
| 5 | 3 | 0 |

→ MLP ~ S310 →

Fractional abstract indices

| 3.8 | 2.7 |
| ... | ... |
| ... | ... |
| ... | ... |
| ... | ... |
| ... | ... |

→

S320 ~ Floor & ceil indices, bilinear sampling of values

← Values

→

Integer abstract indices

| 3 | 2 |
| 3 | 3 |
| 4 | 2 |
| 4 | 3 |
| ... | ... |
| ... | ... |

→

S330 ~ Scatter the bilinear sampled values into an abstract signal processing space defined by abstract dimensions using the respective integer indices

← Values

→

S340 ~ Perform e.g. 2D convolutions in the abstract signal processing space defined by abstract dimensions

→

Gather context information from the processed abstract signal processing space at the original high-dimensional indices ~ S350

→ Context

Fig. 3

Projection of Range from a 3D radar cube
using a linear projection (sum) on dimensions U x V

Fig. 4

Projection of Azimuth from a 3D radar cube
using a linear projection (sum) on dimensions U x V

Fig. 5

Fig. 6

Fig. 7

Fig. 8

Projection of Range rate from a 3D radar cube
on 2D manifold trained with SOM oon dimensions UxV

Fig. 9

Projection of Range from a 3D radar cube
using a learned projection on dimensions U x V

Fig. 10

Projection of Azimuth from a 3D radar cube
using a learned projection on dimensions U x V

Fig. 11

Fig. 12

Europäisches
Patentamt

European
Patent Office

Office européen
des brevets

# EUROPEAN SEARCH REPORT

**Application Number**

EP 22 19 1145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/113160 A2 (QUALCOMM INC [US]) 4 June 2020 (2020-06-04) * abstract; figures 1-3, 11, 13 * * paragraphs [0060], [0068], [0071] – [0073], [0076], [0082] – [0084], [0087] * | 1-15 | INV. G01S7/41 G01S13/86 G01S17/89 G01S17/931 G06F18/25 |
| A | US 2021/343022 A1 (COHEN JOSHUA KRISER [US] ET AL) 4 November 2021 (2021-11-04) * abstract; figures 1-4 * * paragraphs [0024] – [0025], [0053], [0062], [0107], [0111] – [0113] * | 1-15 | |
| A | ARTHUR OUAKNINE: "Deep learning for radar data exploitation of autonomous vehicle", ARXIV.ORG, CORNELL UNIVERSITY LIBRARY, 201 OLIN LIBRARY CORNELL UNIVERSITY ITHACA, NY 14853, 15 March 2022 (2022-03-15), XP091190981, * abstract * * pages 18, 27 * | 1-15 | |

TECHNICAL FIELDS
SEARCHED (IPC)

G01S
G06V
G06F

The present search report has been drawn up for all claims

| Place of search | Date of completion of the search | Examiner |
|---|---|---|
| Munich | 19 January 2023 | Cordeiro, J |

EPO FORM 1503 03.82 (P04C01)

## ANNEX TO THE EUROPEAN SEARCH REPORT
## ON EUROPEAN PATENT APPLICATION NO.

EP 22 19 1145

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2023

| Patent document cited in search report | | Publication date | Patent family member(s) | | Publication date |
|---|---|---|---|---|---|
| WO 2020113160 | A2 | 04-06-2020 | CN | 113167860 A | 23-07-2021 |
| | | | EP | 3887849 A2 | 06-10-2021 |
| | | | KR | 20210096607 A | 05-08-2021 |
| | | | TW | 202028778 A | 01-08-2020 |
| | | | US | 2021255304 A1 | 19-08-2021 |
| | | | WO | 2020113160 A2 | 04-06-2020 |
| US 2021343022 | A1 | 04-11-2021 | US | 11062454 B1 | 13-07-2021 |
| | | | US | 2021343022 A1 | 04-11-2021 |

EPO FORM P0459

For more details about this annex : see Official Journal of the European Patent Office, No. 12/82